# EUROPEAN PATENT APPLICATION

(11) **EP 4 671 555 A1**
(43) Date of publication of application: **31.12.2025**
(21) Application number: 24760182.6
(22) Date of filing: 09.02.2024
(51) Int. Cl.: F16C 33/42, F16C 19/06

(54) **ROLLER-BEARING RETAINER AND ROLLER BEARING**

(30) Priority: 22.02.2023 JP 2023026144
(71) Applicant: NSK LTD., Tokyo 141-8560 (JP)
(72) Inventor: MATSUZAKI Yasuo, Fujisawa-shi, Kanagawa 251-8501 (JP); MARUYAMA Taisuke, Fujisawa-shi, Kanagawa 251-8501 (JP)
(74) Representative: Grünecker Patent- und Rechtsanwälte PartG mbB
(86) International application number: PCT/JP2024/004670
(87) International publication number: WO 2024/176880

(57) **Abstract**

Provided are: a retainer that minimizes any decrease in the amount of oil in an oil film on a rolling surface to minimize seizure and wear, the retainer being capable of handling higher rotation speeds of a roller bearing and not being damaged even when the bearing is assembled; and a roller bearing in which seizure, wear, and the like are minimized and higher rotation speed is made possible. A roller-bearing retainer (1) is composed of an annular flat plate having a width that can be accommodated in a gap between an outer ring (110) and an inner ring (120) of a rolling bearing, the roller-bearing retainer (1) comprising: a pair of annular members (5A, 5B) provided with the same number of circular holes as rolling elements (130), the circular holes being formed at equal intervals along the widthwise center; and a connecting member (15 (16, 17)) that connects the pair of annular members (5A, 5B) in a spaced-apart state so that holes (10A, 10B) are made to face each other. The rolling elements (130) are enclosed between the pair of annular members (5A, 5B), and parts of the outer peripheral surfaces of the rolling elements (130) are accommodated in the holes (10A, 10B), whereby the rolling elements (130) are retained.

## Description

### TECHNICAL FIELD

The present invention relates to a rolling bearing cage and a rolling bearing including the cage.

### BACKGROUND ART

In a rolling bearing, if an amount of lubricant flowing into a contact portion between a raceway surface and a rolling element becomes small, metal contact occurs, causing wear and heat generation. In addition, an oil film of grease or lubricating oil used for lubrication becomes thinner as heat is generated, causing further wear and heat generation. Therefore, various researches have been made to secure the oil film.

For example, Patent Literature 1 proposes forming one or a plurality of grooves recessed in a circumferential direction on at least one side of a pocket of a crown-shaped cage in the circumferential direction, in which the lubricant on a surface of a rolling element is not scraped off by the cage, but passes through the grooves and reaches a contact point between an outer ring or an inner ring and a rolling ball on an opposite side in a radial direction, so that a shortage of oil on a rolling surface is prevented and occurrence of seizure, wear, or the like is reduced.

### CITATION LIST

### PATENT LITERATURE

Patent Literature 1: JP2022-163421A

### SUMMARY OF INVENTION

### TECHNICAL PROBLEM

However, not only the crown-shaped cage in which the predetermined groove is formed as in Patent Literature 1, but a crown-shaped cage in general have a problem that when a bearing rotates at a high speed, an interval between claw portions that define the pockets increases, and a force with which the rolling element is held decreases. In addition, when the rolling element is press-fitted into the pocket in an assembly process of the bearing, the claw portion may be damaged, such as chipped or broken.

Therefore, an object of the present invention is to provide a cage that can prevent a decrease in the amount of oil in an oil film on a rolling surface to reduce the occurrence of seizure and wear, can cope with higher speed rotation of a rolling bearing, and is not damaged during assembly of the bearing, and to provide a rolling bearing in which the occurrence of seizure and wear is reduced and can rotate at a higher speed.

### SOLUTION TO PROBLEM

An object of the present disclosure is achieved by the following configuration [1] related to a rolling bearing cage.
[1] A rolling bearing cage that holds a plurality of rolling elements between an outer ring and an inner ring in a rollable manner, the rolling bearing cage including:
   a pair of annular members each made of an annular flat plate and each having a plurality of circular holes formed along a circumferential direction; and
   a coupling member configured to couple the pair of annular members while maintaining a separated state and the holes facing each other,
   wherein the pair of annular members sandwich the rolling element and hold the rolling element by accommodating a part of the rolling element in the hole.
   Preferred embodiments of the present invention related to the rolling bearing cage relate to the following [2] and [3].
[2] In the rolling bearing cage according to [1], (D1/D2) = 10% to 40%, where (D1/D2) is a ratio of a diameter (D1) of the hole in the annular member to a diameter (D2) of the rolling element.
[3] In the rolling bearing cage according to [1] or [2], a portion of the hole of the annular member that comes into contact with an outer peripheral surface of the rolling element is chamfered.
   An object of the present disclosure is achieved by the following configuration [4] related to a rolling bearing.
[4] A rolling bearing including:
   a rolling bearing cage configured to hold a plurality of rolling elements between an outer ring and an inner ring in a rollable manner,
   wherein the rolling bearing cage is the rolling bearing cage according to any one of [1] to [3].

### ADVANTAGEOUS EFFECTS OF INVENTION

According to the rolling bearing cage of the present invention, a decrease in the amount of oil in an oil film on a rolling surface can be prevented to reduce the occurrence of seizure and wear, and a force with which a rolling element is held is not decreased even when a bearing rotates at a high speed. Further, there is no risk of a claw being damaged in a process of assembling the bearing, as is the case with a crown-shaped cage.

In addition, the rolling bearing according to the present invention is provided with such a cage, so that a decrease in the amount of oil in the oil film on the rolling surface is prevented, thereby reducing the occurrence of seizure and wear and resulting in a longer service life. Further, even when the bearing rotates at a high speed, a force with which the rolling element is held is not decreased and the stability is enhanced.

### BRIEF DESCRIPTION OF DRAWINGS

FIG. 1 is an exploded perspective view showing an example of a rolling bearing cage according to the present invention.
FIG. 2 is a cross-sectional view showing an example of a rolling bearing according to the present invention, showing a configuration including the rolling bearing cage shown in FIG. 1.
FIG. 3 is a schematic view showing a measuring device used for measuring a film thickness of an oil film on a rolling surface in an example.
FIG. 4 is a graph showing results of measuring a film thickness (m) of an oil film on a rolling surface with respect to a rotation speed (rpm) in various cages (crown-shaped cage, punched cage, cage according to the present invention) used in Examples.
FIG. 5 is a photograph showing a periphery of a pocket of a crown-shaped cage after measurement.
FIGS. 6A to 6C are schematic views illustrating a difference in action of each cage with respect to lubricating oil adhering to a rolling element, in which FIG. 6A shows a case of a crown-shaped cage, FIG. 6B shows a case of a rolling bearing cage according to the present invention, and FIG. 6C shows a case of a punched cage.

### DESCRIPTION OF EMBODIMENTS

Hereinafter, an embodiment of the present invention will be described in detail with reference to the drawings. It should be noted that the present invention is not limited to the embodiments described below, and can be freely modified and implemented without departing from the gist of the present invention.

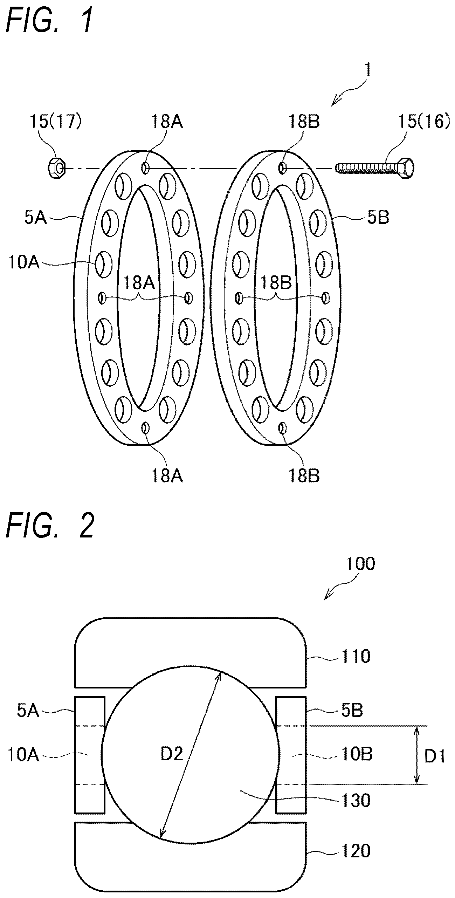

FIG. 1 is an exploded perspective view showing an example of a rolling bearing cage 1 according to the present invention. As shown in FIG. 1, the rolling bearing cage 1 is configured such that a pair of annular members 5A and 5B are arranged to face each other at a predetermined interval, and are coupled to each other by a coupling member 15 to maintain the facing state.

FIG. 2 is a cross-sectional view showing a rolling bearing 100 according to one embodiment of the present invention. As shown in FIG. 2, both of the annular members 5A and 5B are annular flat plates each having a width that can be accommodated in a gap between an outer ring 110 and an inner ring 120, and each has a plurality of holes 10A and 10B, the number of which is the same as that of rolling elements 130, are formed at equal intervals along a center line of the width and along a circumferential direction of the annular flat plate.

In the present embodiment, the holes 10A and 10B are formed at equal intervals and in the same number as the rolling elements 130. However, in the present invention, as long as the function of the rolling bearing is not impaired, the intervals do not necessarily have to be equal, and the number of rolling elements 130 and the number of holes 10A and 10B do not have to be the same.

As shown in FIG. 1, the coupling member 15 includes, for example, a bolt 16 and a nut 17. In the annular members 5A and 5B, coupling member holes 18A and 18B are formed at appropriate positions between the adjacent holes 10A and 10B, for example, at four positions shifted by a phase of 90° as illustrated in the example of FIG. 1. The bolt 16 is inserted from the coupling member hole 18B of one annular member 5B, and a tip end of the bolt 16 is protruded from the coupling member hole 18A of the other annular member 5A and fastened by the nut 17. As a result, the pair of annular members 5A and 5B are coupled while being arranged to face each other at a predetermined interval, that is, while being separated from each other.

Further, the pair of annular members 5A and 5B are arranged to face each other such that the respective coupling member holes 18A and 18B face each other. Thus, the hole 10A of the annular member 5A and the hole 10B of the annular member 5B face each other.

In order to maintain the state in which the pair of annular members 5A and 5B are arranged to face each other at a predetermined interval, for example, a tubular spacer having a predetermined size may be interposed between the pair of annular members 5A and 5B, the bolt 16 may be passed through the annular member 5A, the tubular spacer, and the annular member 5B in this order, and these members may then be fastened together by the nut 17.

The material of the annular members 5A and 5B is not limited, and may be metal or resin.

As shown in FIG. 2, the rolling bearing cage 1 configured as described above is assembled to the rolling bearing 100 in a state where the rolling element 130 is sandwiched between the pair of annular members 5A and 5B and a part of an outer peripheral surface of the rolling element 130 is accommodated in the holes 10A and 10B. Since the rolling element 130 is merely sandwiched between the pair of annular members 5A and 5B, there is no risk of the claw being damaged during the process of assembling the rolling bearing 100, as is the case with a crown-shaped cage. Further, even when the rolling bearing 100 rotates at a high speed, the interval between the claws of the pockets does not increase, and a force with which the rolling element 130 is held does not decrease.

Further, as shown in the examples described later, there is no risk of the lubricant being scraped off by the holes 10A and 10B of the annular members 5A and 5B as occurs in the crown-shaped cage, and a sufficient oil film can be secured, thereby enabling the lubricating performance to be maintained for a long period of time.

In order to hold the rolling element 130 well, when the size of the holes 10A and 10B of the annular members 5A and 5B, that is, a diameter (D1) of the holes 10A and 10B with respect to a diameter (D2) of the rolling element is (D1/D2), (D1/D2) is preferably 10% to 40%, more preferably 20% to 35%, and still more preferably 25% to 30%.

Further, the holes 10A and 10B of the annular members 5A and 5B may be chamfered (rounded) at portions that come into contact with the outer peripheral surface of the rolling element 130 to reduce the contact resistance between the rolling element 130 and the annular members 5A and 5B.

### Examples

Hereinafter, the present invention will be further clarified with reference to Examples.

The cage according to the present invention including the pair of annular members 5A and 5B and the coupling member 15, a crown-shaped cage, and a punched cage were each prepared, and were assembled to a ball bearing (bearing number "6306"), which is a rolling element, to produce a test bearing. The annular members 5A and 5B are made of an annular acrylic plate having a thickness of 2 mm, an outer diameter of 58 mm, and an inner diameter of 48 mm, and have 16 holes 10A and 10B with a diameter (D1) of 3.5 mm formed therein. The holes 10A and 10B are not chamfered. Each of the test bearings was filled with 40 µL of grease that uses poly-α-olefin oil (kinematic viscosity: 130 mm²/s, 40°C) as a base oil and a metal soap as a thickener.

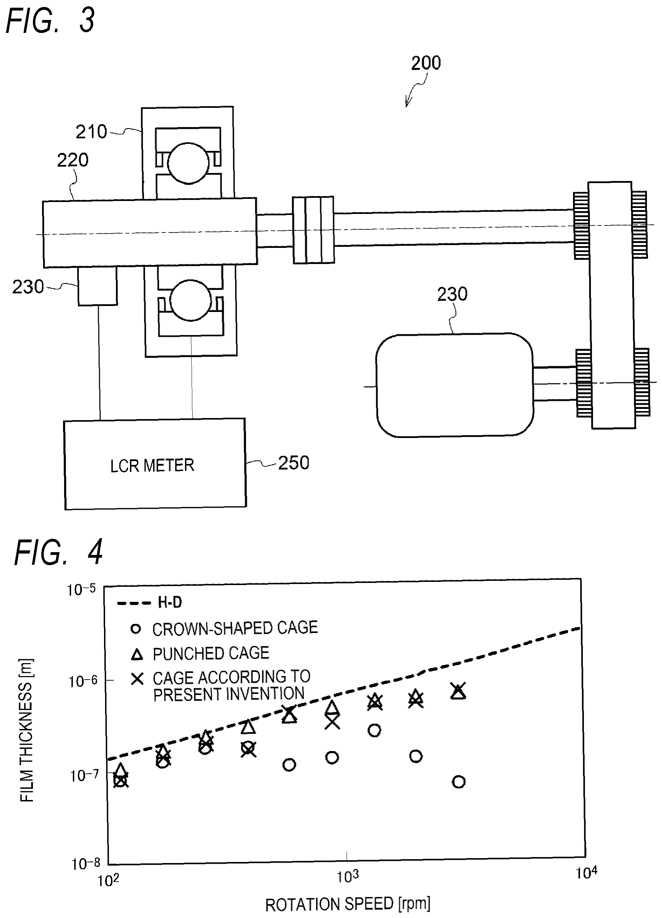

Then, for each of the three types of test bearings, a film thickness of the oil film was measured using a measuring device 200 shown in FIG. 3. In the illustrated measuring device 200, a test bearing 210 rotatably supports a rotation shaft 220. The rotation shaft 220 is rotated by a motor 230. The rotation shaft 220 is connected to an LCR meter 250 via a rotating connector 240. The rotating connector 240 is implemented using, for example, a carbon brush, and electrically connects the test bearing 210 to the LCR meter 250. The angular frequency ω and the AC voltage V of an AC power supply are input to the LCR meter 250, and the impedance of the test bearing 210 is output from the LCR meter 250. Then, the film thickness of the oil film is obtained using the information on the AC voltage V of the angular frequency ω and the relative permittivity at the high frequency limit.

For details of the measuring device 200, reference can be made to Japanese Patent No. 7057868 filed by the present applicant.

Then, with an axial load of 436 N, a radial load of 0 N, and a maximum contact load of 10 GPa applied to the test bearing 210, a rotation speed N was continuously increased in a range of 100 rpm 3000 rpm, and a film thickness of the oil film was measured at each predetermined rotation speed.

The measurement was performed at 25°C in a state where an axial load of 4.36 N was applied to the test bearing. Results are shown in FIG. 4. FIG. 4 is a graph showing results of measuring a film thickness (m) of an oil film on a rolling surface with respect to a rotation speed (rpm) in various cages (crown-shaped cage, punched cage, cage according to the present invention) used in Examples. The dotted line (H-D) in the figure indicates a theoretical oil film thickness calculated from the Hamrock-Dowson equation. Further, in the graph of FIG. 4, plots of the crown-shaped cage are indicated by ∘, plots of the punched cage are indicated by Δ, and plots of the cage according to the present invention are indicated by x.

As shown in FIG. 4, in the case of using the cage according to the present invention (indicated by "x" in the figure), the film thickness is thicker than that in the case of using the crown-shaped cage (indicated by "o" in the figure) in the entire rotation speed range, and a difference in film thickness is particularly large at a high rotation speed.

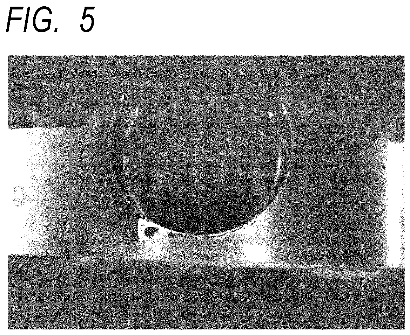

After the measurements, the test bearings were disassembled to observe the appearance of each cage. As shown in FIG. 5, the base oil of the grease filled in the crown-shaped cage was adhered to the periphery of the pocket, and the base oil was scraped out. In contrast, in the cage according to the present invention, no adhesion of the base oil was observed around the hole of the annular member.

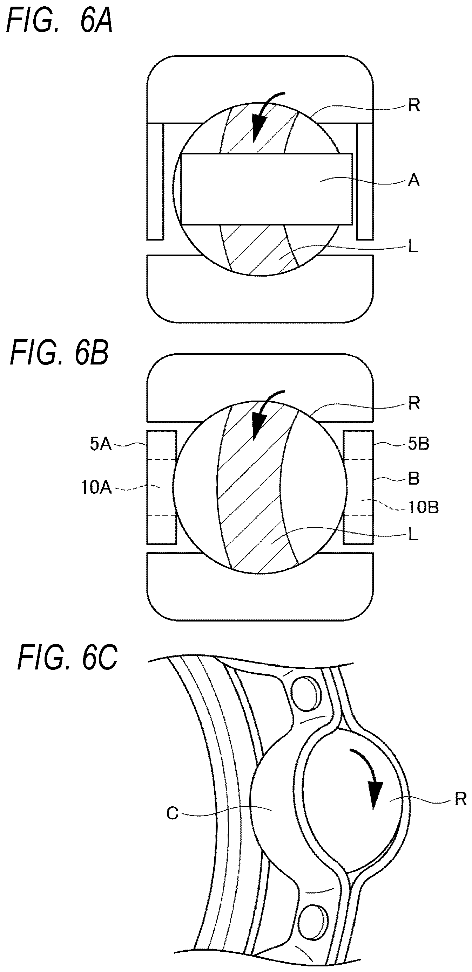

FIGS. 6A to 6C are schematic views illustrating a difference in action of each cage with respect to lubricating oil adhering to a rolling element R, in which FIG. 6A shows a case of a crown-shaped cage, FIG. 6B shows a case of a rolling bearing cage according to the present invention, and FIG. 6C shows a case of a punched cage. Reference character A in FIG. 6A indicates the crown-shaped cage, reference character B in FIG. 6B indicates the cage according to the present invention, and reference character C in FIG. 6C indicates the punched cage. The rolling element R rotates and moves from the back side of the page to the front side as shown by the arrow, and accordingly, the lubricating oil adheres in a band shape extending substantially vertically from the outer ring toward the inner ring as illustrated (hereinafter, a lubricating oil adhering portion is referred to as "reference character L"). Therefore, in the crown-shaped cage A, the pocket and the lubricating oil adhering portion L are orthogonal to each other, and it is considered that the lubricating oil is scraped off by the pocket as shown in FIG. 5.

On the other hand, in a cage B according to the present invention, the holes 10A and 10B of the annular members 5A and 5B are substantially parallel to the lubricating oil adhering portion L, and it is considered that the lubricating oil is not scraped off and the film thickness is not reduced.

As shown in FIG. 4, the punched cage C maintains a film thickness substantially equal to that of the cage B according to the present invention. It is considered that this is because, as shown in FIGS. 6A to 6C, similarly to the cage B according to the present invention, the lubricating oil adhering portion L and the punched cage C are not orthogonal to each other, and the lubricating oil is not scraped off. However, when the bearing is rotated at a higher speed, a radial load is applied, and accordingly, the lubricating oil adhering portion L is no longer substantially vertical as shown in FIGS. 6A to 6C, but instead inclines and meanders to the left and right and comes into contact with a side wall C1 of the punched cage C, which is expected to cause the lubricating oil to be scraped off.

In the cage B according to the present invention, even if the bearing is rotated at a high speed and the lubricating oil adhering portion L meanders, the holes 10A and 10B of the annular members 5A and 5B are separated from the lubricating oil adhering portion L, so that the lubricating oil adhering portion L is unlikely to come into contact with the holes 10A and 10B of the annular members 5A and 5B, and scraping off of the lubricating oil is prevented. The measurement results shown in FIG. 4 also show that when the cage according to the present invention is used, the film thickness at a rotation speed of 3000 rpm is slightly greater than that of the punched cage.

As described above, the cage according to the present invention is suitable for enabling the rolling bearing to rotate at a higher speed.

The larger the diameters of the holes 10A and 10B of the annular members 5A and 5B described above, the deeper the rolling elements are accommodated, and a distance between the holes 10A and 10B and the lubricating oil adhering portion L shown in FIGS. 6A to 6C becomes smaller. Accordingly, when the lubricating oil adhering portion L meanders, the lubricating oil adhering portion L easily comes into contact with the holes 10A and 10B. Therefore, the diameter (D1) of the holes 10A and 10B of the annular members 5A and 5B is preferably equal to or less than 40% of the diameter (D2) of the rolling element 130 as described above.

Although various embodiments have been described above, it is needless to say that the present invention is not limited to these examples. It is apparent to those skilled in the art that various changes or modifications can be conceived within the scope described in the claims, and it is understood that the changes or modifications naturally fall within the technical scope of the present invention. In addition, the components described in the above embodiments may be combined in any manner without departing from the spirit of the invention.

The present application is based on a Japanese patent application (No. 2023-026144) filed on February 22, 2023, contents of which are incorporated herein by reference.

### REFERENCE SIGNS LIST

1 rolling bearing cage
5A, 5B annular member
10A, 10B hole
15 coupling member
16 bolt
17 nut
18A, 18B coupling member hole
100 rolling bearing
110 outer ring
120 inner ring
130 rolling element
200 measuring device
210 test bearing
220 rotation shaft
230 motor
240 rotating connector
250 LCR meter

## Claims

1. A rolling bearing cage that holds a plurality of rolling elements between an outer ring and an inner ring in a rollable manner, the rolling bearing cage comprising:
a pair of annular members each made of an annular flat plate and each having a plurality of circular holes formed along a circumferential direction; and
a coupling member configured to couple the pair of annular members while maintaining a separated state and the holes facing each other,
wherein the pair of annular members sandwich the rolling element and hold the rolling element by accommodating a part of the rolling element in the hole.

2. The rolling bearing cage according to claim 1,
wherein (D1/D2) = 10% to 40%, where (D1/D2) is a ratio of a diameter (D1) of the hole in the annular member to a diameter (D2) of the rolling element.

3. The rolling bearing cage according to claim 1 or 2,
wherein a portion of the hole of the annular member that comes into contact with an outer peripheral surface of the rolling element is chamfered.

4. A rolling bearing comprising:
a rolling bearing cage configured to hold a plurality of rolling elements between an outer ring and an inner ring in a rollable manner,
wherein the rolling bearing cage is the rolling bearing cage according to claim 1 or 2.

5. A rolling bearing comprising:
a rolling bearing cage configured to hold a plurality of rolling elements between an outer ring and an inner ring in a rollable manner,
wherein the rolling bearing cage is the rolling bearing cage according to claim 3.
